## Europäisches Patentamt
## European Patent Office
## Office européen des brevets

(11) Veröffentlichungsnummer : **0 052 693
B1**

(12) **EUROPÄISCHE PATENTSCHRIFT**

(45) Veröffentlichungstag der Patentschrift :
22.06.83

(51) Int. Cl.³ : **C 03 C 11/00**

(21) Anmeldenummer : **81105417.0**

(22) Anmeldetag : **11.07.81**

(54) **Verfahren zum Herstellen von Schaumglas-Formkörpern.**

(30) Priorität : **24.11.80 DE 3044130**

(43) Veröffentlichungstag der Anmeldung :
**02.06.82 Patentblatt 82/22**

(45) Bekanntmachung des Hinweises auf die Patenterteilung : **22.06.83 Patentblatt 83/25**

(84) Benannte Vertragsstaaten :
**AT BE CH DE FR GB IT LI LU NL SE**

(56) Entgegenhaltungen :
**DE A 2 010 263
NUCLEAR ENGINEERING, Band 8, Nr. 87, August 1963, Seite 285, « Soviet Radiation-resistant Foam Glass »**

(73) Patentinhaber : **Dennert, Heinz
Trosdorfer Weg 6
D-8602 Bischberg (DE)**

**Dennert, Hans Veit
Mozartweg 1
D-8602 Schlüsselfeld (DE)**

(72) Erfinder : **Die Erfinder haben auf ihre Nennung verzichtet.**

(74) Vertreter : **Tergau, Enno et al
Hefnersplatz 3 Postfach 9347
D-8500 Nürnberg 11 (DE)**

# 0 052 693

## Verfahren zum Herstellen von Schaumglas-Formkörpern

Die Erfindung betrifft ein Verfahren zum Herstellen von Schaumglas-Formkörpern nach dem Oberbegriff des Anspruches 1.

Schaumglas-Formkörper sowie Verfahren zu deren Herstellung sind bereits bekannt. Die Formkörper können dabei die Gestalt kleiner Kugeln oder auch von Platten oder anders geformten Gegenständen haben. Insbesondere kugelförmige Schaumglaskörper finden als Isoliermittel im Baugewerbe Verwendung, aber auch als schwimmende Dochte zum Aufsaugen von Öl auf Wasserflächen, die es gestatten, das Öl durch Abbrennen zu entfernen. Plattenförmige Schaumglaskörper kommen ebenfalls als Wärme- und Schallisoliermaterial in Betracht ; sie dienen aber auch als Unterlegplatten für warm zu behandelnde Gegenstände sowie zu zahlreichen anderen Zwecken.

Bei der Herstellung von Schaumglasformkörpern wird nach Möglichkeit von solchen Materialien ausgegangen, die billig sind und in großen Mengen zur Verfügung stehen. Es bietet sich insbesondere zerkleinertes Abfallglas an, also beispielsweise zerkleinerte Flaschen, Fensterscheiben, Abfälle aus Glasfabriken und ähnliches. Darüberhinaus ist es aber auch bekannt, in der Natur vorkommende Rohstoffe, wie Tone und ähnliches zu verarbeiten sowie auch Abfallstoffe der Industrie wie beispielsweise Aschen oder ähnliches. In allen Fällen wird das meist fein gemahlene Ausgangsmaterial durch chemische Naßbehandlung aufgeschlossen, die dabei entstehende Schlempe getrocknet und granuliert sowie das Granulat durch Erwärmen auf erhöhte Temperatur getrocknet und verschäumt. Der Aufschlußmischung kann bereits das erforderliche Treibmittel zugesetzt werden ; es ist aber auch bekannt, das Treibmittel erst später der Schlempe zuzufügen.

Aus der deutschen Patentschrift 21 51 232 ist ein Verfahren zur Herstellung eines wasserhaltigen Produktes aus Mischsilikaten bekannt, welches Produkt als Rohstoff zur Herstellung von Schaumglas in Platten- oder Granulatform dient. Zur Herstellung des Rohproduktes wird durch Schmelzen hergestelltes stückiges Alkalisilikat (sogenanntes Stückenglas) zusammen mit Wasser und pulvrigen und/oder fasrigen alkalilöslichen oxidischen und/oder silikatischen Ausgangsstoffen in einen Rollautoklaven eingefüllt und durch Einleiten von Wasserdampf erhitzt. Das Gewichtsverhältnis des Alkalisilikates zu aufzuschließendem Glas o. dgl. beträgt 1 : 0,02 ... 0,8. Bei Einleiten des Dampfes wird der Autoklaveninhalt erwärmt und auf Überdrücke von 1 bis 5 atü gebracht. Dabei geht das stückige Alkalisilikat langsam in Lösung und durch die *in statu nascendi* befindliche Wasserglaslösung werden die oxidischen und/oder silikatischen Stoffe aufgelöst, also aufgeschlossen. Der Aufschlußprozeß dauert einige Stunden, wobei die Masse dauernd fließfähig bleiben muß, um im Rollautoklaven bewegt werden zu können. Die entstehende Schlempe wird alsdann getrocknet und das erhaltene pulverförmige Produkt in an sich bekannter Weise zu Schaumglasformkörpern weiterverarbeitet.

Der Erfindung liegt die Aufgabe zugrunde, das vorbekannte Verfahren weiter zu verbessern, um es einerseits in kürzerer Zeit und andererseits ohne Anwendung von Autoklaven und unter Einsparung von Energie durchführen zu können. Hierzu wird vorgeschlagen, daß eine Mischung zweier Glassorten, nämlich

a) Glas mit mehr als 16 Gew.% Alkalioxid

b) Glas mit weniger als 16 Gew.% Alkalioxid

beide mit einer Korngröße von 95 Gew.% unter 0,1 mm, im Gewichtsverhältnis

$$a : b = 1 : 1,5 \ldots 1 : 20$$

mit Wasser bei Temperaturen von 50 bis vorzugsweise 95 °C bis zum Ansteifen gerührt wird, wobei das Verhältnis Wasser : Gesamtfeststoff wie 1 : 1,4 ... 2,5 beträgt und daß die erhaltene Masse zu Schaumglas-Formkörpern weiterverarbeitet wird.

Im Unterschied zu dem durch die DE-PS 21 51 232 vorbekannten Verfahren wird also nunmehr von zwei feingemahlenen Glassorten ausgegangen, von denen die eine mehr als 16 Gew.% Alkalioxid und die andere weniger als 16 Gew.% Alkalioxid enthält. Unter der Glassorte a) (mehr als 16 Gew.% Alkalioxid) fällt auch das übliche Stückenglas, obgleich auch andere eigens zu diesem Zweck erschmolzene Glassorten eingesetzt werden können. Außerdem wird die Wassermenge stark reduziert, wodurch die Energiebilanz bei Durchführung des Verfahrens verbessert wird. Durch die angegebenen Maßnahmen kann auf die Verwendung eines Autoklaven verzichtet und bei normalem Druck gearbeitet werden. Die erforderliche Bewegung der Aufschlußmasse wird durch Rühren durchgeführt. Anstelle des Rührens können auch gleichwirkende Maßnahmen eingesetzt werden, wie Umpumpen, Refiner-Behandlung und ähnliches. Im Laufe der Behandlung, meist schon nach wenigen Minuten, tritt Ansteifen der Masse ein, so daß eine schwer bis nicht mehr fließfähige Schlempe entsteht. Diese Schlempe kann nun durch Einbringen von getrocknetem und, soweit erforderlich, gemahlenem oder geschrotetem Über- und/oder Unterkorn zu Formkörpern, beispielsweise Granulaten, verarbeitet und sogleich durch Erwärmen auf erhöhte Temperatur getrocknet und verschäumt werden.

Das Verfahren bietet die bereits erwähnten Vorteile, nämlich die Durchführung in einem einfachen Rührgefäß, also unter Verzicht auf einen Autoklaven sowie auch eine gegenüber dem vorbekannten Verfahren weitaus verkürzte Reaktionszeit. Wesentlich ist aber auch, daß das Verfahren nicht nur mit zerkleinertem festen Alkalisilikat, sogenanntem Stückenglas, durchgeführt werden kann, sondern daß auch Alkalimischsilikate eingesetzt werden können. Stückenglas muß bekanntlich aus reinem Quarzsand durch Schmelzen mit Soda o. dgl. hergestellt werden und ist folglich verhältnismäßig teuer. Die im angegebenen Verfahren einsetzbaren Alkalimischsilikate können auch aus verunreinigten Sanden erzeugt werden und sind deshalb billiger. Bei Durchführung entsprechender Versuche hat sich darüberhinaus gezeigt, daß die Verwendung von Alkalimischsilikaten anstelle von Stückenglas sogar zu besseren, insbesondere zu wasserbeständigeren Produkten führen.

Gemäß einer bevorzugten Ausführungsform der Erfindung wird vorgeschlagen, daß als Alkalimischsilikat ein Glas mit mehr als 16 % Alkalioxid und wenigstens einem Oxid eines mehrwertigen Metalles in Mengen von wenigstens 1 Gew.% zugesetzt wird. Als günstig hat es sich erwiesen, ein Alkalimischsilikat mit mehr als 16 % Alkalioxid und 1 bis 10 % Erdalkalioxid, $Al_2O_3$ und/oder $Fe_2O_3$ zu verwenden.

Eine weitere Verbesserung des angegebenen Verfahrens kann erreicht werden, wenn der Mischung der Ausgangsstoffe oder der daraus hergestellten Schlempe ein Treibmittelgemisch in Mengen von bis zu 10 Gew.% (bezogen auf Feststoff) zugesetzt wird, das neben einem organischen C-liefernden Stoff ein bei Temperaturen um 600 bis 700 °C sauerstoffabgebendes Mittel und ein weiteres bei Temperaturen um 700 bis 900 °C sauerstoffabgebendes Mittel enthält. Als bevorzugte Zusammensetzung wird ein Treibmittelgemisch mit 2 Gewichtsteilen Pyrolusit, 3 Gewichtsteilen $Na_2SO_4$, 3 Gewichtsteilen Zucker oder die äquivalente Menge eines anderen C-liefernden Stoffes empfohlen. Die vorgeschlagene Verfahrensvariante unter Verwendung eines Treibmittelgemisches gestattet es, die gegebenenfalls granulierte Schlempe in zwei Stufen zu verschäumen. Bereits bei verhältnismäßig niedrigen Temperaturen um 600 bis 700 °C beginnt die C-Verbrennung unter Bildung von $CO_2$ als Treibgas. Die Masse beginnt also bereits bei verhältnismäßig niedriger Temperatur aufzublähen. Bei weiterer Temperatursteigerung wären die üblichen einstufig wirkenden Treibmittelmischungen verbraucht. Die hier vorgeschlagene Mischung wird aber bei Temperaturen um 700 bis 900 °C nochmals aktiviert, in dem dann das vorhandene Natriumsulfat unter Reduktion zum Natriumsulfid Sauerstoff abgibt, wodurch nochmals organische Substanz verbrennt und $CO_2$ als Treibgas geliefert wird. Es sind jedoch auch andere Treibmittelzusammensetzungen möglich. So hat sich z. B. eine Kombination von 1 % Pyrolusit, 0,5 % Zucker, 2 % $CaCO_3$, 1 % $BaCO_3$ bewährt. Als Resultat liegen in jedem Fall Schaumglas-Formkörper mit geringem spezifischen Gewicht vor. Will man die Schaumglasformkörper fester und schwerer machen, ohne den Preis pro m³ wesentlich zu erhöhen, so ist das Füllen mit inerten pulvrigen Materialien möglich, die während der Aufschluß- oder Verschäumungsphase nicht oder nur wenig mit den Glasmehlen oder den Treibmitteln reagieren, z. B. Quarzmehl, Gesteinsmehle, Elektrofilterasche, hochschmelzende gemahlene Schlacke oder andere billige pulvrige Abfallstoffe.

Das vorgeschlagene Verfahren wird im folgenden anhand zweier Ausführungsbeispiele näher erläutert.

Beispiel 1

760 kg Flaschenabfallglas und 180 kg eines besonders erschmolzenen Glases aus 68 % $SiO_2$, 27 % $Na_2O$, 5 % sonstige Metalloxide werden in einer Mühle auf eine Körnung unter 0,1 mm gemahlen. Diese Glasmehlmenge rührt man in einem Rührbehälter zusammen mit 30 kg $Na_2SO_4$, 30 kg Zucker und 20 kg Pyrolusit (70 % $MnO_2$) und 600 kg Wasser bei 90 °C 40 Min. lang. In die eingedickte Mischung bringt man 500 kg Unter- und feingemahlenes Überkorn und erhöht die Drehzahl des Rührers. Dadurch wird die Gesamtmischung größtenteils auf Korngrößen von 0,5 bis 2,0 mm granuliert. Nach Entleeren des Rührkessels wird in einem Drehrohr, das auf 300 °C geheizt wird, das durchlaufende Granulat getrocknet. Das aus dem Drehrohr auslaufende Granulat trennt man in einer Siebmaschine in Unter-, Über- und Brauchkorn.

Unter- und das in einem Brecher zerkleinerte Überkorn wird in ein Vorratssilo zurückgeführt und zur Granulierung verwendet. Das Brauchkorn wird mit 20 Gew.% Tonmehl gemischt und in einem Verschäumungsrohr bei 780 °C auf das 5-fache Volumen gebläht. Nach Abtrennung überschüssigen Trennmittels hat ein m³ des entstandenen Granulats ein Gewicht von 125 kg bei 4 bis 6 mm Korngröße.

Beispiel 2

840 kg aus dem Recycling stammendes Flaschenglas in einer Körnung von 96 % unter 0,1 mm und 4 % darüber wird mit 100 kg besonders erschmolzenen schlechtem Glas der gleichen Körnung, bestehend aus 64 % unreinen Sand und 30 % $Na_2O$ und 6 % sonstigen Metalloxiden, 28 kg $Na_2SO_4$, 30 kg Glycerin und 21 kg Pyrolusit mit 80 % $MnO_2$ und 700 ltr. kochenden Wassers in einen Rührbehälter eingetragen und 30 Min. lang gerührt. Zu dieser Mischung werden anschließend 600 kg Unter- und feingemahlenes Überkorn gegeben und die Drehzahl des Rührers auf das 4-fache gesteigert. Das entstandene Granulat wird auf einem Schwingbett mit 250 °C Heißlufttemperatur getrocknet, dann durch Sieben in Unter-, Überkorn und Brauchkorn getrennt. Das Brauchkorn verschäumt man in engen Fraktionsbereichen unter Zugabe von 10 Gew.% Zement bei 790 °C in einem Drehrohr. In einem Kühlrohr, das eine Stundenleistung des Drehrohres aufnehmen kann, wird das Schaumglas-Granulat auf Raumtemperatur gekühlt, bevor es in ein Silo geblasen wird. Ein Granulat der Korngröße 4 bis 8 mm hat ein Schüttgewicht von ca. 130 kg/m³.

Weitere Ausführungsbeispiele, bei denen die technischen Verfahrensbedingungen gleich den vorgenannten Beispielen waren, gehen aus der nachfolgenden Tabelle hervor. Die Tabelle zeigt auch die Wirkung des in Spalte 1 angegebenen Mehrstufentreibmittels, bei dessen Anwendung besonders niedrige Raumgewichte von 0,10 bis 0,20 g/cm³ erzielt werden können.

Tabelle

| | | | | |
|---|---|---|---|---|
| Abfallglas < 16 % $Na_2O$ | 72 kg | 72 kg | 72 kg | 92 kg |
| Sonderglas > 16 % $Na_2O$ | 20 kg | 20 kg | 20 kg | — |
| $Na_2SO_4$ | 3 kg | 3 kg | — | 3 kg |
| Pyrolusit | 2 kg | — | 2 kg | 2 kg |
| Zucker | 3 kg | 3 kg | 3 kg | 3 kg |
| Wasser 90 °C | 60 kg | 60 kg | 60 kg | 60 kg |
| Verschäumungstemperatur | 780° | 780° | 780° | kein Schäumen bis 850° |
| Verschäumungszeit | 7 Min | 7 Min | 7 Min | 7 Min |
| Raumgewicht g/cm³ | 0,10-0,20 | 0,25-0,40 | 0,30-0,40 | 0,90-1,1 |

**Ansprüche**

1. Verfahren zum Herstellen von Schaumglas-Formkörpern aus gemahlenem Glas durch Aufschließen mit festem Alkalisilikat und Wasser, Zusatz wenigstens eines Treibmittels sowie gegebenenfalls von Füllstoff zur Aufschlußmischung oder der daraus entstehenden Schlempe, gegebenenfalls Granulieren der Schlempe und Verschäumen bei erhöhter Temperatur, dadurch gekennzeichnet, daß eine Mischung zweier Glassorten, nämlich

a) Glas mit mehr als 16 Gew.% Alkalioxid

b) Glas mit weniger als 16 Gew.% Alkalioxid

beide mit einer Korngröße zu 95 % unter 0,1 mm im Gewichtsverhältnis

$$a : b = 1 : 1,5 \ldots 1 : 20$$

mit Wasser bei Temperaturen von 50 bis vorzugsweise 95 °C bis zum Ansteifen gerührt wird,
wobei das Verhältnis Wasser : Gesamtfeststoff wie 1 : 1,4 ... 2,5 beträgt.
und daß die erhaltene Masse zu Schaumglasformkörpern weiterverarbeitet wird.

2. Verfahren nach Anspruch 1, dadurch gekennzeichnet, daß als Glassorte a) ein Alkalimischsilikat mit mehr als 16 % Alkalioxid und wenigstens einem Oxid eines mehrwertigen Metalles in Mengen von wenigstens 1 Gew.% zugesetzt wird.

3. Verfahren nach Anspruch 1 oder 2, dadurch gekennzeichnet, daß als Glassorte a) ein Alkalimischsilikat mit mehr als 16 Gew.% Alkalioxid und 1 bis 10 Gew.% Erdalkalioxid, $Al_2O_3$ und/oder $Fe_2O_3$ zugesetzt wird.

4. Verfahren nach Anspruch 1, gegebenenfalls in Verbindung mit wenigstens einem der nachfolgenden Ansprüche, dadurch gekennzeichnet, daß der Mischung der Ausgangsstoffe oder der daraus hergestellten Schlempe ein Treibmittelgemisch in Mengen von bis zu 10 Gew.% (bezogen auf Feststoff) zugesetzt wird, das neben einem organischen C-liefernden Stoff ein bei Temperaturen um 600 bis 700 °C sauerstoffabgebendes Mittel und ein weiteres bei Temperaturen um 700 bis 900 °C sauerstoffabgebendes Mittel enthält.

5. Verfahren nach Anspruch 4, dadurch gekennzeichnet, daß der Mischung der Ausgangsläser oder der daraus hergestellten Schlempe ein Treibmittelgemisch folgender Zusammensetzung in Mengen von bis zu 10 Gew.% (bezogen auf Feststoff) zugesetzt wird :
2 Gewichtsteile Pyrolusit
3 Gewichtsteile $Na_2SO_4$
3 Gewichtsteile Zucker oder die äquivalente Menge eines anderen C-liefernden organischen Stoffes.

**Claims**

1. Process for the manufacture of foamed glass mouldings from ground glass by fusion with solid alkali metal silicate and water, addition of at least one blowing agent and, if appropriate, a filler to the fusion mixture or to the fused mass formed therefrom, if appropriate granulating the fused mass and foaming at an elevated temperature, characterised in that a mixture of two grades of glass, namely

a) glass with more than 16 % by weight of alkali metal oxide,

b) glass with less than 16 % by weight of alkali metal oxide
95 % of both having a grain size of less than 0.1 mm, is stirred in a weight ratio of

$$a : b = 1 : 1{\cdot}5 \ldots 1 : 20$$

with water at temperatures from 50 up to preferably 95 °C until the mixture begins to stiffen, the water : total solids ratio being 1 : 1.4 ... 2.5, and that the mass obtained is further processed to give foamed glass mouldings.

2. Process according to Claim 1, characterised in that, as the glass grade a), a mixed alkali metal silicate with more than 16 % of alkali metal oxide and at least one oxide of a polyvalent metal is added in quantities of at least 1 % by weight.

3. Process according to Claim 1 or 2, characterised in that, as the glass grade a), a mixed alkali metal silicate with more than 16 % by weight of alkali metal oxide and 1 to 10 % by weight of an alkaline earth metal oxide, $Al_2O_3$ and/or $Fe_2O_3$ is added.

4. Process according to Claim 1, if appropriate in conjunction with at least one of the subsequent claims, characterised in that a blowing agent mixture which, in addition to an organic substance furnishing carbon, contains an agent releasing oxygen at temperatures of about 600 to 700 °C and a further agent releasing oxygen at temperatures of about 700 to 900 °C, is added in quantities of up to 10 % by weight (relative to solids) to the mixture of the starting materials or to the fused mass prepared therefrom.

5. Process according to Claim 4, characterised in that a blowing agent mixture of the following composition is added in quantities of up to 10 % by weight (relative to solids) to the mixture of the starting glasses or to the fused mass prepared therefrom :
2 parts by weight of pyrolusite,
3 parts by weight of $Na_2SO_4$ and
3 parts by weight of sugar or the equivalent quantity of another organic substance furnishing carbon.

**Revendications**

1. Procédé pour préparer des corps en verre expansé à partir de verre broyé par attaque avec un silicate alcalin solide et de l'eau, addition d'au moins un agent gonflant et le cas échéant d'une matière de charge au mélange d'attaque ou à la bouillie formée à partir de celui-ci, le cas échéant mise en granulés de la bouillie et gonflement en mousse à haute température, caractérisé en ce que on agite un mélange de deux types de verre, à savoir
a) du verre à plus de 16 % en poids d'oxyde alcalin,
b) du verre à moins de 16 % en poids d'oxyde alcalin,
les deux verres à une dimension de grain de 95 % au-dessous de 0,1 mm, dans des proportions relatives en poids

$$a : b = 1 : 1,5 \ldots 1 : 20$$

avec de l'eau à des températures allant de 50 jusqu'à, de préférence, 95 °C, jusqu'à début de solidification,
le rapport eau : matière solide totale étant de 1 : 1,4 ... 2,5, et on convertit la masse obtenue en corps de verre expansé.

2. Procédé selon la revendication 1, caractérisé en ce que l'on ajoute en tant que type de verre a) un silicate alcalin mélangé contenant plus de 16 % d'oxyde alcalin et au moins un oxyde d'un métal polyvalent en quantité d'au moins 1 % en poids.

3. Procédé selon la revendication 1 ou 2, caractérisé en ce que l'on ajoute en tant que type de verre a) un silicate alcalin mélangé contenant plus de 16 % en poids d'oxyde alcalin et 1 à 10 % en poids d'oxyde alcalino-terreux, d'$Al_2O_3$ et/ou de $Fe_2O_3$.

4. Procédé selon la revendication 1, éventuellement en combinaison avec au moins une des revendications qui suivent, caractérisé en ce que l'on ajoute au mélange des produits de départ ou à la bouillie préparée à partir de ces produits un mélange d'agents gonflants en quantités allant jusqu'à 10 % en poids (par rapport à la matière solide), mélange d'agents gonflants qui, en plus d'une substance libérant du C organique, contient une substance qui libère de l'oxygène à des températures d'environ 600 à 700 °C et une autre substance qui libère de l'oxygène à des températures d'environ 700 à 900 °C.

5. Procédé selon la revendication 4, caractérisé en ce que l'on ajoute au mélange des verres de départ ou à la bouillie préparée à partir de ces verres un mélange d'agents gonflants à la composition suivante en quantités allant jusqu'à 10 % en poids (par rapport à la matière solide) :
2 parties en poids de pyrolusite,
3 parties en poids de $Na_2SO_4$,
3 parties en poids de sucre ou la quantité équivalente d'une autre substance organique fournissant du C.